# EUROPÄISCHE PATENTSCHRIFT

(11) **EP 2 027 374 B1**
(45) Veröffentlichungstag und Bekanntmachung des Hinweises auf die Patenterteilung: **15.12.2010**
(21) Anmeldenummer: 07728393.5
(22) Anmeldetag: 23.04.2007
(51) Int. Cl.: F01N 3/025, F02M 61/06, F02M 61/08, F02M 61/18

(54) **VORRICHTUNG ZUR REGENERATION, ZUR TEMPERATURBEAUFSCHLAGUNG UND/ODER ZUM THERMOMANAGEMENT, ZUGEHÖRIGES EINSPRITZVENTIL UND VERFAHREN**
DEVICE FOR REGENERATION, TEMPERATURE LOADING AND/OR THERMAL MANAGEMENT, ASSOCIATED INJECTION VALVE AND METHOD
DISPOSITIF DE RÉGÉNÉRATION, DE SOLLICITATION EN TEMPÉRATURE ET/OU DE THERMOGESTION, SOUPAPE D'INJECTION ASSOCIÉE ET PROCÉDÉ

(30) Priorität: 23.05.2006 DE 102006024073; 06.12.2006 DE 102006057425
(43) Veröffentlichungstag der Anmeldung: 25.02.2009
(73) Patentinhaber: Robert Bosch GmbH, 70442 Stuttgart (DE)
(72) Erfinder: HAEBERER, Rainer, 75015 Bretten (DE); LANGE,Joerg, 71735 Eberdingen (DE); REUSING, Volker, 70197 Stuttgart (DE); REISER, Tobias, 71139 Ehningen (DE); STEIN, Stefan, 70195 Stuttgart (DE)
(86) Internationale Anmeldenummer: PCT/EP2007/053936
(87) Internationale Veröffentlichungsnummer: WO 2007/134929

(56) Entgegenhaltungen:
- EP-A- 1 655 482
- WO-A-02/43840
- WO-A-2007/012512
- DE-A1-102004 034 075

## Beschreibung

### Stand der Technik

Die Erfindung betrifft ein Einspritzventil zur Verwendung in einer Vorrichtung zur Regeneration, zur Temperaturbeaufschlagung und/oder zum Thermomanagement eines einem Abgassystem zugeordneten Bauteils einer Brennkraftmaschine bzw. ein Verfahren zur Regeneration, zur Temperaturbeaufschlagung und/oder zum Thermomanagement eines dem Abgassystem zugeordneten Bauteils nach der Gattung der unabhängigen Ansprüche.

Es ist bekannt, in einem Abgassystem eines Verbrennungsmotors eines Fahrzeugs einen Partikelfilter zu installieren. Handelt es sich bei dem Verbrennungsmotor beispielsweise um einen Dieselmotor, so wirkt der Partikelfilter beispielsweise als Russfilter und senkt aufgrund seiner Filterwirkung die Feinstaubbelastung. Um zu verhindern, dass sich nach einer bestimmten Einsatzdauer der Filter zusetzt, ist es erforderlich, den Filter von Zeit zu Zeit zu regenerieren. Die Regeneration erfolgt durch Temperaturerhöhung beispielsweise auf rund 600 Grad Celsius, wodurch die Partikel, insbesondere Russpartikel, verbrennen. Da dies nicht in allen Betriebszuständen durch motorische Maßnahmen möglich ist, wird die Temperaturerhöhung durch Kraftstoff, zum Beispiel Diesel, erzielt, der über ein Einspritzventil in den Abgasstrang eingespritzt wird. Der eingespritzte Kraftstoff gelangt zu einem Oxidationskatalysator, der vor dem Partikelfilter angeordnet ist. Der in den Oxidationskatalysator gelangende Kraftstoff wird oxidiert bzw. verbrannt und führt zu einer Abgastemperaturerhöhung, so dass entsprechend heiße Abgase zum nachgeschalteten Partikelfilter gelangen und dort die Regeneration bewirken.

Für die Eindosierung von Kraftstoff ins Abgas können herkömmliche Mehr- und Einzelloch-Einspritzventile verwendet werden. Diese haben jedoch den Nachteil, dass sich die Löcher durch Ablagerungen von im Abgas vorhandenem Ruß bei den vorhandenen Betriebsbedingungen zusetzen bzw. verkoken. In Folge dessen nimmt die Dosiermenge über der Betriebsdauer ab; dies führt unter Umständen dazu, dass die eingespritzte Menge nicht mehr für die Regeneration des Partikelfilters ausreicht, oder schlimmstenfalls gar nicht mehr dosiert werden kann.

Ebenfalls verwendet werden kann ein Einspritzventil, das in Abhängigkeit des Drucks des zugeführten Kraftstoffes arbeitet, d.h., übersteigt der Druck des zugeführten Kraftstoffs einen bestimmten, vorgegebenen Wert, dann öffnet das Einspritzventil und spritzt eine Kraftstoffmenge in das Abgassystem ein. Hierdurch sinkt der Druck im Zuführsystem, so dass das Einspritzventil wieder schließt. Nun steigt der Druck wieder an, so dass das Einspritzventil wieder öffnet und Kraftstoff in das Abgassystem einspritzt. Damit öffnet und schließt sich das Einspritzventil rhythmisch, was zu einem so genannten Schnarrbetrieb führt. Ein solcher Schnarrbetrieb ist aus dem "Bosch Automotive Handbook, 6th Edition", Robert Bosch GmbH, 2004, ISBN 0-8376-1243-8, Seite 645 bekannt. Des Weiteren ist eine Einstellung eines Schnarrbetriebs bei einer Vorrichtung zur Abgasnachbehandlung einer Brennkraftmaschine in der deutschen Patentanmeldung DE 102005034704 beschrieben. Da die Zuführung des Kraftstoffs zum Einspritzventil aufgrund der beteiligten Komponenten nicht mit konstantem Druck erfolgt, sondern Druckschwankungen und gegebenenfalls auch kurzfristige Druckspitzen vorliegen, kann es zum Aussetzen des Schnarrbetriebs kommen.

Aus der WO 02/43840 A1 sind eine Einrichtung und ein Verfahren zum Nachbehandeln von Abgasen bekannt, bei der beziehungsweise bei dem mittels eines steuerbaren Ventils ein Hilfsmittel in flüssiger Form unter hohen Drücken in den Abgastrakt eingebracht wird. Der hohe Druck unterstützt eine effiziente Mischung des Hilfsmittels zur Nachbehandlung mit dem aus der Brennkraftmaschine stammenden Abgas.

Aus der EP 1 655 482 A1 ist ein Ventil zum Einspritzen von Brennstoff mit einem Ventilkörper und einer Ausnehmung bekannt. Die Ausnehmung weitet sich in einem abströmseitigen Bereich kegelförmig oder kugelförmig hin zu einer Ablösekante und bildet in dem abströmseitigen Bereich einen Ventilsitz. Das Ventil hat ferner eine Ventilnadel, die an einem abströmseitigen Ende einen Schließkörper hat, der sich in der Strömungsrichtung kegelförmig oder kugelförmig hin zu einer ersten Kante weitet. Der Ventilkörper erstreckt sich stromabwärts der Ablösekante bis zu einer zweiten Kante. Die Ausnehmung weitet sich stromabwärts der Ablösekante bis zu der zweiten Kante so, dass sich der Brennstoffstrom an der Ablösekante von dem Ventilkörper ablöst.

### Offenbarung der Erfindung

Die erfindungsgemäße Vorrichtung zur Regeneration, zur Temperaturbeaufschlagung und/oder zum Thermomanagement eines einem Abgassystem zugeordneten Bauteils einer Brennkraftmaschine, das erfindungsgemäße Einspritzventil bzw. das erfindungsgemäße Verfahren mit den Merkmalen der unabhängigen Patentansprüche haben demgegenüber den Vorteil, dass eine auf das von der Vorrichtung umfasste Einspritzventil wirkende Strömungskraft eines zugeführten Kraftstoffs über einem Hub des Ventilkopfes kontinuierlich abfällt bzw. dass die Geometrien eines Ventilkopfes und eines Ventilsitzes des Einspritzventils entsprechend ausgeführt sind. Dadurch wird der Druckbereich für ein robustes Schnarrverhalten vergrößert, wodurch in vorteilhafter Weise eine gute Kraftstoffsprayaufbereitung im Abgasstrang sowie ein sicherer Schutz vor übermäßiger Verkokung erzielt werden kann.

Durch die in den abhängigen Ansprüchen aufgeführten Maßnahmen und Weiterbildungen sind vorteilhafte Verbesserungen des erfindungsgemäßen Einspritzventils bzw. der erfindungsgemäßen Vorrichtung bzw. des erfindungsgemäßen Verfahrens möglich.

Besonders vorteilhaft ist, dass ein äußerer Kopfdurchmesser des Ventilkopfes größer als ein äußerer Sitzdurchmesser des Ventilsitzes ausgeführt ist, wodurch der Ventilkopf im geschlossenen Zustand über den Ventilsitz übersteht und eine Ventildichtkante auf den äußeren Sitzdurchmesser gelegt ist. Der Ventilsitz weist beispielsweise zwischen einem inneren Sitzdurchmesser und dem äußeren Sitzdurchmesser eine gerade Ventilsitzschnittkante auf, welche einen vorgegebenen Winkel α zur Senkrechten aufweist.

In Ausgestaltung der erfindungsgemäßen Vorrichtung bzw. Einspritzventils nimmt eine Ventilkopfschnittkante des Ventilkopfes von einem inneren Kopfdurchmesser auf den äußeren Kopfdurchmesser mit einer flachen kugelförmigen Außenwölbung zu, welche einen vorgegebenen Ventilkopfradius aufweist.

In Ausgestaltung der erfindungsgemäßen Vorrichtung zur Regeneration, zur Temperaturbeaufschlagung und/oder zum Thermomanagement eines einem Abgassystem zugeordneten Bauteils einer Brennkraftmaschine, ist das Einspritzventil beispielsweise als federbelastetes Ventil ausgeführt.

In weiterer Ausgestaltung der erfindungsgemäßen Vorrichtung ist dem Einspritzventil ein die Kraftstoffzufuhr unterbindendes Sicherheitsventil vorgeschaltet. Dieses Sicherheitsventil befindet sich demgemäß stromaufwärts des Einspritzventils und hat die Aufgabe, in bestimmten Situationen, beispielsweise bei einem Unfall des Fahrzeugs, die Kraftstoffzufuhr zu unterbinden, sodass es nicht zu einem unkontrollierten Austritt von Kraftstoff in das Abgassystem kommen kann.

Ferner ist es vorteilhaft, wenn dem Einspritzventil ein die Kraftstoffmenge bestimmendes Zumessventil vorgeschaltet ist. Das stromaufwärts des Einspritzventils angeordnete Zumessventil bestimmt Zeitabschnitte, während der das Regenerieren des Partikelfilters durchgeführt werden soll, indem es öffnet und die Kraftstoffeinspritzung in das Abgassystem ermöglicht. Überdies kann auch die jeweils vom Einspritzventil eingebrachte Kraftstoffmenge mittels des dosierend wirkenden Zumessventils festgelegt werden. Dies kann steuernd oder auch regelnd erfolgen und von dem jeweiligen Betriebszustand des Kraftfahrzeugs abhängig sein. Dabei ist es möglich, nicht nur für die Zwecke einer Regeneration des Partikelfilters mittels des Zumessventils Kraftstoff in das Abgassystem einzubringen, sondern um auch andere Aufgaben zu erfüllen, beispielsweise um nach einem Kaltstart schnell eine hohe Temperatur im Abgassystem zu erzeugen, um sehr schnell die Funktionsfähigkeit des Abgaskatalysators zu erzielen, der für seine Funktion eine bestimmte Betriebstemperatur benötigt.

In weiterer Ausgestaltung der erfindungsgemäßen Vorrichtung sind das Einspritzventil, das Sicherheitsventil und das Drucksteuerventil in einem Niederdruckkreis eines Kraftstoffeinspritzsystems der Brennkraftmaschine angeordnet.

Das dem Abgassystem zugeordnete Bauteil kann ein Partikelfilter sein, um Abgaspartikel auszufiltern. Alternativ oder zusätzlich ist es auch möglich, dass es sich bei dem Bauteil um einen NOx-Speicher handelt. Durch die Temperaturbeaufschlagung des NOx-Speichers aufgrund der erfindungsgemäßen Vorrichtung ist es möglich, eine Entschwefelung des NOx-Speichers herbeizuführen. Zusätzlich oder alternativ zum Entschwefeln ist auch eine Regeneration des NOx-Speichers aufgrund der erfindungsgemäßen Vorrichtung durchführbar. Zusätzlich oder alternativ ist es aufgrund der erfindungsgemäßen Vorrichtung möglich, ein Temperieren, insbesondere ein Thermomanagement zu bewirken, d.h., die Temperatursituation lässt sich im Abgassystem wunschgemäß beeinflussen.

Wird als Brennkraftmaschine ein Dieselmotor verwendet, so bildet der Partikelfilter einen Dieselpartikelfilter. Dieser verhindert den Austritt von Dieselruß in die Umwelt, das heißt, die Feinstaubbelastung wird reduziert.

Weitere vorteilhafte Weiterbildungen und Verbesserungen der erfindungsgemäßen Vorrichtung zur Regeneration, zur Temperaturbeaufschlagung und/oder zum Thermomanagement eines einem Abgassystem zugeordneten Bauteils einer Brennkraftmaschine bzw. des erfindungsgemäßen Einspritzventils bzw. des erfindungsgemäßen Verfahrens ergeben sich durch die in den weiteren abhängigen Ansprüchen und in der Beschreibung genannten Merkmale.

Ausführungsbeispiele der Erfindung sind in den Zeichnungen dargestellt und werden in der nachfolgenden Beschreibung näher erläutert.

### Kurze Beschreibung der Zeichnungen

Fig. 1 zeigt ein hydraulisches Schaltbild einer erfindungsgemäßen Vorrichtung zur Regeneration, zur Temperaturbeaufschlagung und/oder zum Thermomanagement eines einem Abgassystem zugeordneten Bauteils einer Brennkraftmaschine eines Fahrzeugs.
Fig. 2 zeigt eine schematische Bereichsschnittdarstellung eines Einspritzventils.
Fig. 3 zeigt eine schematische Bereichsschnittdarstellung einer erfindungsgemäßen Vorrichtung in Form eines Einspritzventils.
Fig. 4 zeigt ein Kennliniendiagramm des Einspritzventils gemäß Fig. 2.
Fig. 5 zeigt ein Kennliniendiagramm des erfindungsgemäßen Einspritzventils gemäß Fig. 3.
Fig. 6 bis 8 zeigen verschiedene Kennliniendiagramme des erfindungsgemäßen Einspritzventils gemäß Fig. 3.
Figur 9 bis 11 zeigen verschiedene Kennliniendiagramme des Einspritzventils gemäß Fig. 2.
Figur 12 zeigt ein Einspritzventil.
Figur 13 zeigt eine weitere schematische Bereichsschnittdarstellung eines Einspritzventils.
Figur 14 zeigt ein Einspritzventil mit integriertem Zumessventil.

### Ausführungsform(en) der Erfindung

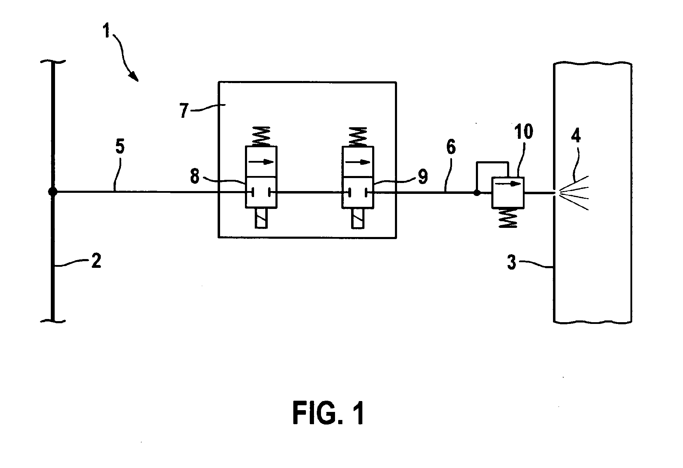

Wie aus Fig. 1 ersichtlich ist, umfasst eine Vorrichtung 1 zur Regeneration, zur Temperaturbeaufschlagung und/oder zum Thermomanagement eines einem Abgassystem zugeordneten Bauteils einer Brennkraftmaschine, ein Einspritzventil 10, welches Kraftstoff 4 in Abhängigkeit des Drucks des zugeführten Kraftstoffs in einen Abgasstrang 3 des Abgassystems einspritzt, ein dem Einspritzventil 10 vorgeschaltetes Sicherheitsventil, welches die Kraftstoffzufuhr unterbinden kann, und ein Zumessventil 9, welches zwischen dem Sicherheitsventil 8 und dem Einspritzventil 10 angeordnet ist und die Kraftstoffmenge für das Einspritzventil 10 bestimmt. Das betroffene dem Abgassystem zugeordnete Bauteil kann beispielsweise ein Partikelfilter, insbesondere ein Dieselpartikelfilter, oder ein NOx-Speicher sein.

Das Sicherheitsventil 8, das Zumessvenfil 9 und das Einspritzventil 10 sind jeweils als federbelastetes Ventil ausgeführt, wobei das Sicherheitsventil 8 und das Zumessventil 9 in einer Baueinheit 7 angeordnet sind. Das Sicherheitsventil 8 und das Zumessventil 9 sind vorzugsweise elektrisch steuerbar oder regelbar ausgeführt, und können demgemäß der jeweiligen Fahrsituation und den vorliegenden Umständen hinsichtlich ihrer Funktion angepasst werden. Das Einspritzventil 10 öffnet aufgrund der entsprechenden Federvorspannung erst, wenn ein einstellbarer Betriebsdruck überschritten wird. Der zugeführte Kraftstoff muss daher einen bestimmten Druckwert aufweisen.

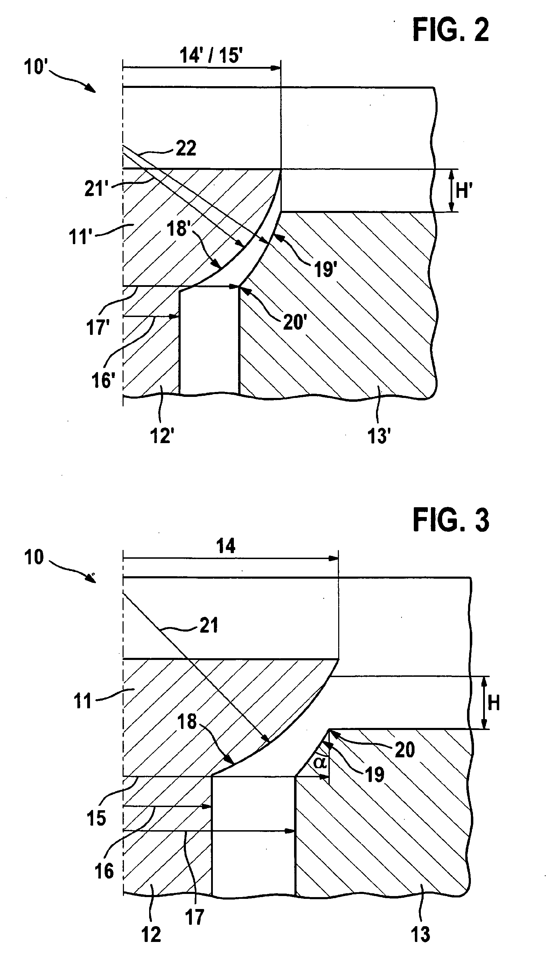

Wie aus Fig. 2 ersichtlich ist, umfasst ein herkömmliches Einspritzventil 10' einen Ventilkopf 11' mit einem äußeren Kopfdurchmesser 14' und einem inneren Kopfdurchmesser 16', einen Ventilschaft 12' und einen Ventilsitz 13' mit einem äußeren Sitzdurchmesser 15', welcher dem äußeren Kopfdurchmesser 14' entspricht, und einem inneren Sitzdurchmesser 17' und wird in Abhängigkeit des Drucks des zugeführten Kraftstoffs vorzugsweise im Schnarrbetrieb betrieben. Der Ventilsitz 13' weist zwischen dem inneren Sitzdurchmesser 17' und dem äußeren Sitzdurchmesser 15' eine gebogene Ventilsitzschnittkante 19' mit einem vorgegebenen Ventilsitzradius 22 auf. Wie weiter aus Fig. 2 ersichtlich ist, weist der Ventilkopf 11' zwischen dem inneren Kopfdurchmesser 16' und dem äußeren Kopfdurchmesser 14' eine Ventilkopfschnittkante 18' auf, welche als steile kugelförmige Außenwölbung mit einem vorgegebenen Ventilkopfradius 21' ausgeführt ist. Dadurch ergibt sich eine Ventildichtkante 20' auf dem inneren Sitzdurchmesser 15'.

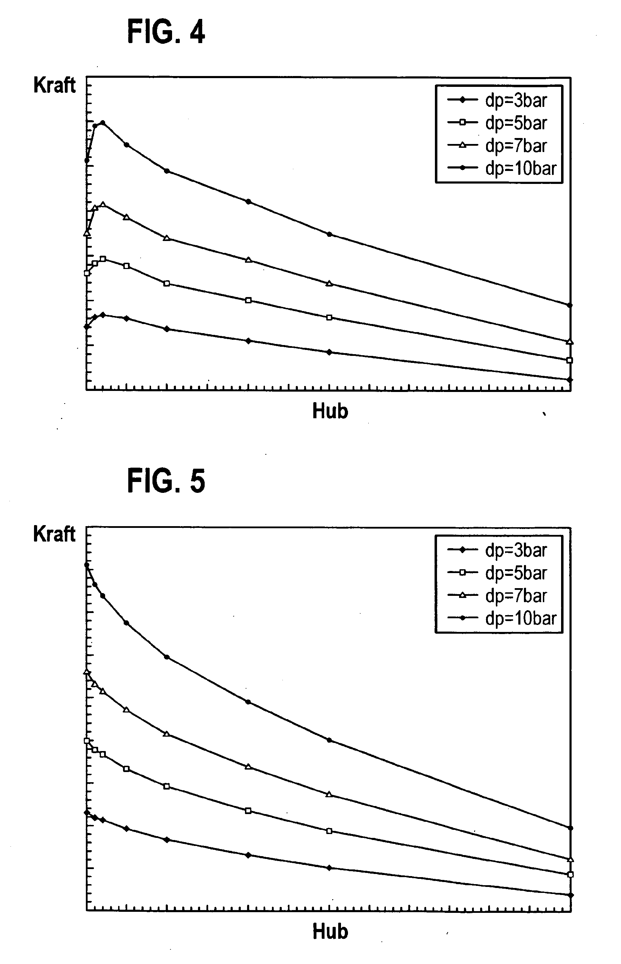

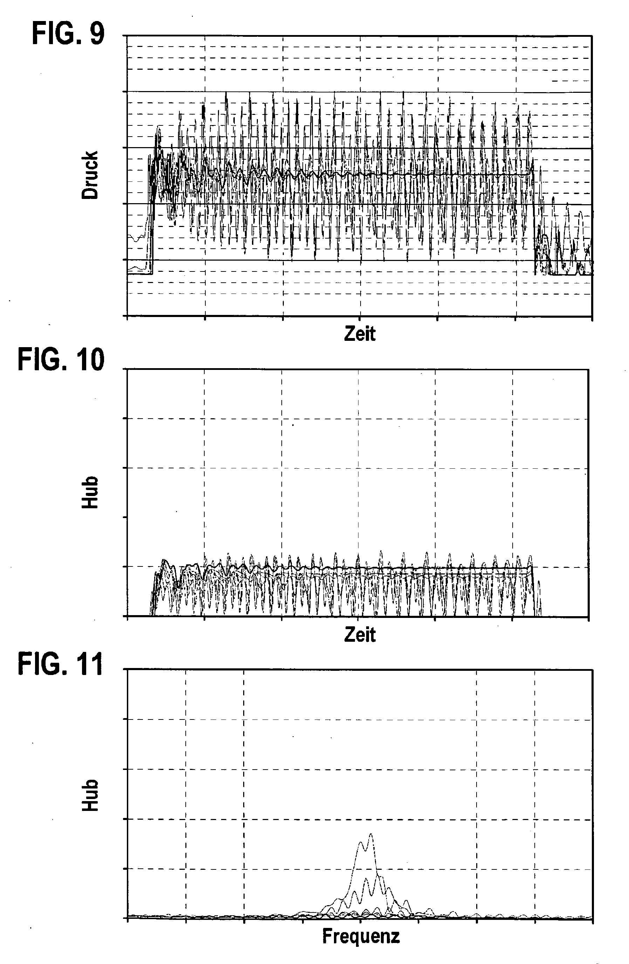

Im Kennliniendiagramm der Fig. 4 sind mehrere Kennlinien für verschiedene Druckwerte von 3bar, 5bar, 7bar und 10bar für die Strömungskraft über dem Hub H dargestellt. Wie aus dem Kennliniendiagramm gemäß Fig. 4 ersichtlich ist, steigt eine auf das herkömmliche Einspritzventil 10' wirkende Strömungskraft des zugeführten Kraftstoffs in Abhängigkeit vom Hub H des Ventilkopfes 11 für alle Druckwerte zuerst an und fällt dann ab. Im zugehörigen Kennliniendiagramm der Fig. 9 sind mehrere Kennlinien für den Druck über der Zeit dargestellt, im zugehörigen Kennliniendiagramm der Fig.10 sind mehrere Kennlinien für den Hub H über der Zeit dargestellt und im zugehörigen Kennliniendiagramm der Fig. 11 sind mehrere Kennlinien für den Hub H über der Frequenz dargestellt. Wie aus den Kennlinien gemäß Fig. 9 bis 11 ersichtlich ist, ergibt sich für das herkömmliche Einspritzventil 10' nur im Druckbereich von ungefähr 2,8bar bis 3,8bar ein robustes Schnarrverhalten.

Wie aus Fig. 3 ersichtlich ist, umfasst das erfindungsgemäße Einspritzventil 10, analog zum herkömmlichen Einspritzventil 10', einen Ventilkopf 11 mit einem äußeren Kopfdurchmesser 14 und einem inneren Kopfdurchmesser 16, einen Ventilschaft 12 und einen Ventilsitz 13 mit einem äußeren Sitzdurchmesser 15 und einem inneren Sitzdurchmesser 17 und wird in Abhängigkeit des Drucks des zugeführten Kraftstoffs vorzugsweise im Schnarrbetrieb betrieben. Im Gegensatz zum herkömmlichen Einspritzventil 10', ist der äußere Kopfdurchmesser 14 des erfindungsgemäßen Einspritzventils 10 größer als der äußere Sitzdurchmesser 15 ausgeführt, wodurch der Ventilkopf 11 im geschlossenen Zustand über den Ventilsitz 13 übersteht und eine Ventildichtkante 20 auf den äußeren Sitzdurchmesser 15 gelegt ist. Zudem weist der Ventilsitz 13 zwischen dem inneren Sitzdurchmesser 17 und dem äußeren Sitzdurchmesser 15 eine gerade Ventilsitzschnittkante 19 auf, welche einen vorgegebenen Winkel zur Senkrechten aufweist. Wie weiter aus Fig. 3 ersichtlich ist, weist der Ventilkopf 11 zwischen dem inneren Kopfdurchmesser 16 und dem äußeren Kopfdurchmesser 14 eine Ventilkopfschnittkante 18 auf, welche in Form einer flachen kugelförmigen Außenwölbung zunimmt, welche einen vorgegebenen Ventilkopfradius 21 aufweist.

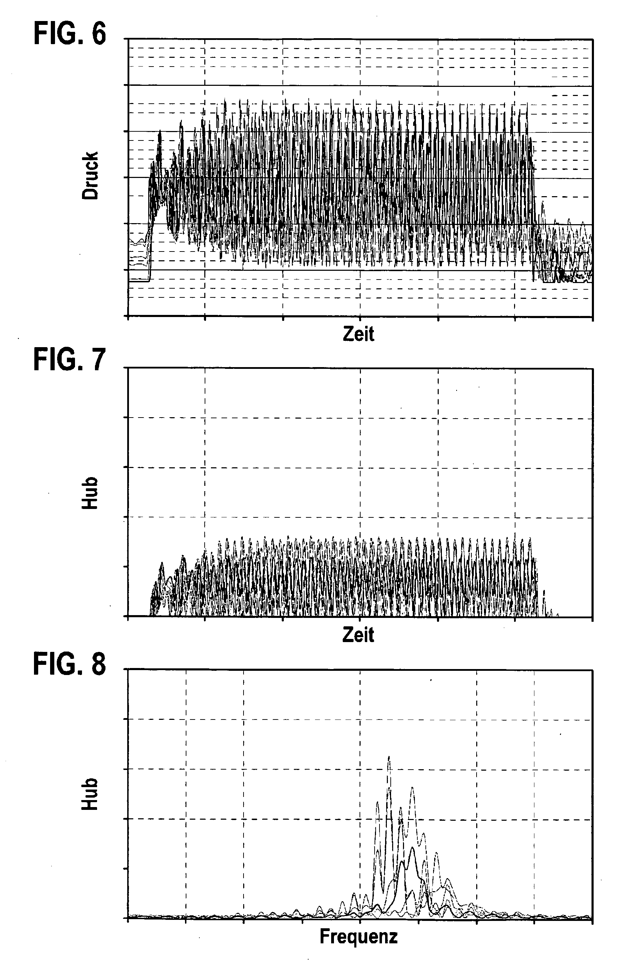

Im Kennliniendiagramm der Fig. 5 sind, analog zum Kennliniendiagramm der Fig. 4, mehrere Kennlinien für verschiedene Druckwerte von 3bar, 5bar, 7bar und 10bar für die Strömungskraft über dem Hub H dargestellt. Wie aus dem Kennliniendiagramm gemäß Fig. 5 ersichtlich ist, fällt die auf das erfindungsgemäße Einspritzventil 10 wirkende Strömungskraft des zugeführten Kraftstoffs in Abhängigkeit vom Hub H des Ventilkopfes 11 für alle Druckwerte kontinuierlich ab, so dass der Druckbereich für ein robustes Schnarrverhalten in vorteilhafter Weise vergrößert wird, wie aus den Kennliniendiagrammen 6 bis 8 ersichtlich ist. Im zugehörigen Kennliniendiagramm der Fig. 6 sind mehrere Kennlinien für den Druck über der Zeit dargestellt, im zugehörigen Kennliniendiagramm der Fig.7 sind mehrere Kennlinien für den Hub H über der Zeit dargestellt und im zugehörigen Kennliniendiagramm der Fig. 8 sind mehrere Kennlinien für den Hub H über der Frequenz dargestellt. Wie aus den Kennlinien gemäß Fig. 6 bis 8 ersichtlich ist, ergibt sich für das erfindungsgemäße Einspritzventil 10 ein robustes Schnarrverhalten für einen vergrößerten Druckbereich von ungefähr 3,0bar bis 4,8bar.

Wie weiter aus Fig. 1 ersichtlich ist, sind das Einspritzventil 10, das Sicherheitsventil 8 und das Zumessventil 9 in einem Niederdruckkreis 2 eines Kraftstoffeinspritzsystems der Brennkraftmaschine angeordnet. Der Niederdruckkreis 2 wird von einer nicht dargestellten mechanischen Kraftstoffförderpumpe gespeist. Die Kraftstoffförderpumpe fördert aus dem Tank des Fahrzeugs Kraftstoff und führt den Kraftstoff, z.B. Dieselkraftstoff für einen Dieselmotor, neben einem Hochdruckkreis für die Motoreinspritzung auch über eine Kraftstoffleitung 5, das Sicherheitsventil 8, das Zumessventil 9 und einer Kraftstoffleitung 6 dem Einspritzventil 10 zu. Das Sicherheitsventil 8 kann die Kraftstoffzufuhr bei einem Notfall absperren, um beispielsweise bei einem Unfall das Auslaufen bzw. Ausspritzen von Kraftstoff zu verhindern. Das Zumessventil 9 kann derart geregelt oder gesteuert werden, dass eine gewünschte Kraftstoffmenge pro Zeiteinheit durch die Kraftstoffleitung 6 dem Einspritzventil 10 zugeführt wird. Das Einspritzventil 10 ist so angeordnet, dass Kraftstoff 4 in den Abgasstrang 3 des Abgassystems der Brennkraftmaschine einspritzt. Stromabwärts des Einspritzventils 10 befindet sich im Abgassystem ein nicht dargestellter Qxidationskatalysator, welcher beim Einspritzen von Kraftstoff die Abgastemperatur im Abgassystem so stark erhöht, dass ein stromabwärts vom Oxidationskatalysator im Abgassystem angeordneter Partikelfilter regeneriert wird. Das bedeutet, dass durch die Temperaturerhöhung ausgefilterte Partikel, wie z.B. Russ und sonstiger Feinstaub, verbrannt werden, so dass nach der Regenerationsphase der Partikelfilter gereinigt zur Verfügung steht.

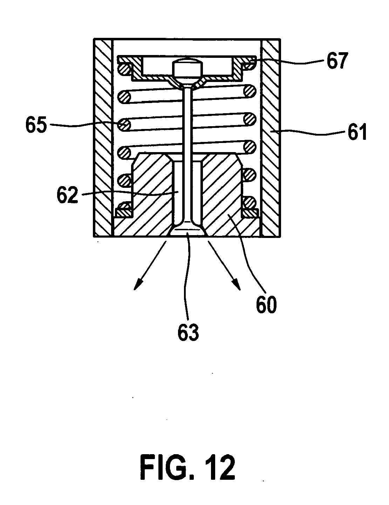

Fig. 12 zeigt ein druckgesteuertes Einspritzventil in einer Querschnittsansicht mit einem rohrförmigen Ventilträger 61, an dessen ventilaustrittsseitigen Ende ein Ventilkörper 60 eingebracht ist. Der Ventilkörper 60 weist eine zentrale Bohrung 62 auf. Innerhalb der Bohrung ist eine einen Ventilkopf aufweisende Ventilnadel 63 angeordnet. Zwischen Ventilkörper 60 und einem Federteller 67 ist eine Feder 65 eingespannt. Der Federteller ist derart auf der dem Ventilkopf abgewandten Seite der Ventilnadel mit der Ventilnadel verbunden, dass die sich auf dem Ventilkörper 60 abstützende Feder 65 den Ventilkopf der Ventilnadel gegen den Ventilkörper drückt, so dass die Bohrung verschlossen ist, solange nicht zusätzliche Kräfte auf die Ventilnadel einwirken.

Es handelt sich hierbei um eine nach außen öffnende Düse. Sie öffnet sich, wenn die Summe von Federkraft, Reibungskraft, Schwerkraft des schwingenden Systems und Druckkraft des anliegenden Kraftstoffs bzw. der hydraulischen Kraft eine Komponente aufweist, die vom Federteller hin zum Ventilkopf orientiert ist. Dabei ist die schwingende Anordnung so optimiert, dass deren Nadel während der Dosierung des Kraftstoffs eine stabile Längsschwingung ausführt. Im geschlossenen Zustand drückt die Feder die nach außen öffnende Nadel in den Sitz. Durch die gezielte Abstimmung der Strömungs-/Druck- und Federkraft führt die Nadel während der Dosierung die erforderliche stabile Schwingbewegung um einen Mittelwert aus. Dieser Schwingungszustand, das sogenannte Schnarren, wird insbesondere durch die gezielte Abstimmung von Strömungs- und Federkraft erreicht. Die Strömungskraft wird hierbei in gezielter Weise durch die bereits beschriebene Wahl des äußeren Kopfdurchmessers relativ zum äußeren Sitzdurchmesser des Ventilsitzes beeinflusst. Anhaftender Russ wird durch die bei der Dosierung auftretende periodische und stabile Längsbeschleunigung der Düsennadel in Verbindung mit der auftretenden Änderung der Strömungsverhältnisse "abgeschüttelt".

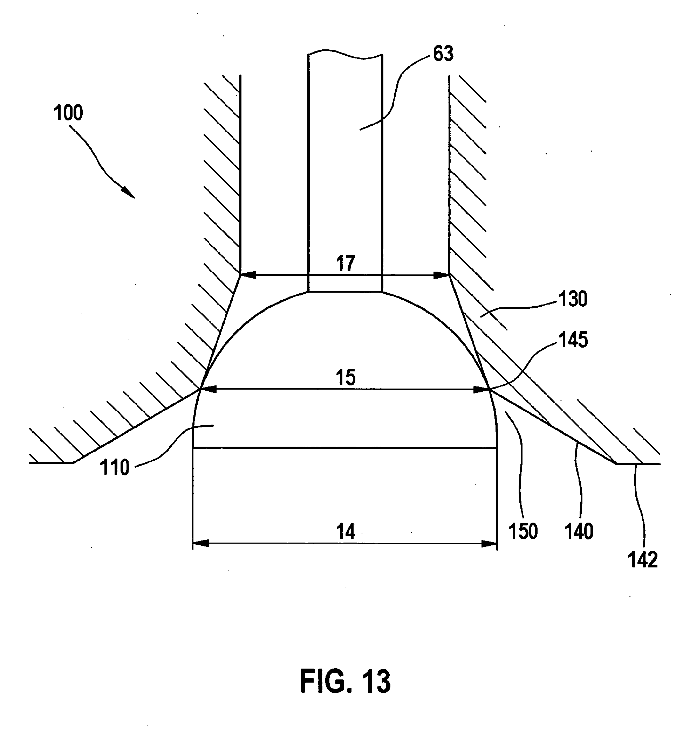

Fig. 13 zeigt ein weiteres erfindungsgemäßes Einspritzventil 100 mit einem Ventilkopf 110, dessen äußerer Kopfdurchmesser 14 analog zur Anordnung nach Fig. 3 größer ist als der äußere Sitzdurchmesser 15. Analog zur Anordnung nach Fig. 3 dient die Düsennadel auch als Abschirmung, die den Ventilsitz 130 bzw. die Ventildichtkante 145 vor dem Ablagern von Partikeln schützt. Im Unterschied zur Anordnung nach Fig. 3 ist die Ventildichtkante 145 gegenüber dem äußeren Randbereich 142 des Ventils bzw. gegenüber einem Gehäuse des Ventils etwas zurückgezogen, so dass im Abgas befindliche Russpartikel nicht unmittelbar auf den sensiblen Bereich der Ventildichtkante 145 treffen, die somit im Windschatten eines abgeschrägten Bereichs 140 bzw. in einer durch den abgeschrägten Bereich gebildeten Nische 150 liegt. Die bevorzugte longitudinale Lage der Ventildichtkante ist möglichst aussen, das heißt weg vom inneren Sitzdurchmesser 17 hin zum äußeren Sitzdurchmesser 15 bzw. auf dem äußeren Sitzdurchmesser 15 wie in Fig. 13 dargestellt, so dass ein Eindringen von Russpartikeln in den inneren Bereich des Ventilsitzes 130 verhindert wird.

Das erfindungsgemäße Einspritzventil 10 bzw. 100 kann bei allen bekannten Einspritzsystemen, unabhängig von deren Bauart, beispielsweise auch bei Ventilanordnungen mit magnetisch oder piezoaktorisch angesteuerter Nadel, insbesondere mit direkt angesteuerter Nadel, eingesetzt werden, so dass ein entsprechend breiter Anwendungsbereich vorliegt. Es wird vorzugsweise an den jeweiligen Niederdruckkreislauf 2 angeschlossen. Durch den im vergrößerten Druckbereich möglichen Schnarrbetrieb des erfindungsgemäßen Einspritzventils 10, lässt sich eine sehr gute Zerstäubung des Kraftstoffs 4 im Abgasstrang 3 erreichen, so dass der Dieselkraftstoff vollständig im Abgastrakt verdampfen kann.

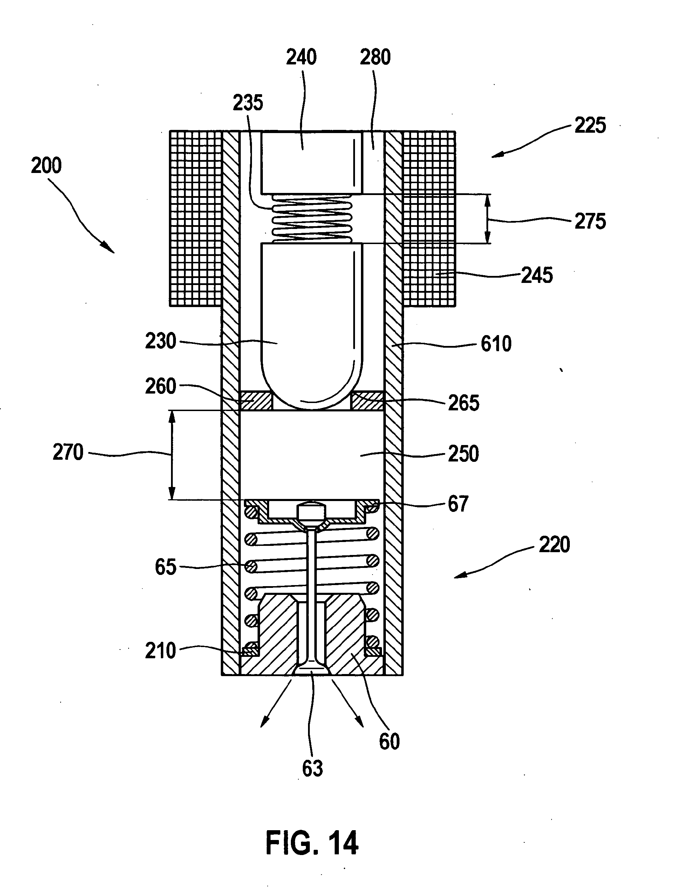

Fig. 14 zeigt in einer Querschnittsansicht eine weitere alternative Ausführungsform des erfindungsgemässen Einspritzventils in Form eines Kombinationsventils 200, das ein erstes, druckgesteuertes Ventil 220 und ein zweites magnetgesteuertes Ventil 225 aufweist. Beide Ventile sind in einem insbesondere rohrförmigen Ventilträger 610 integriert. Die Bauteile 60, 63, 65 und 67 entsprechen der Ausführung nach Fig. 12, wobei der Ventilkopf wahlweise zurückversetzt gemäß Fig. 13 oder hervorstehend gemäß Fig. 3 ausgebildet sein kann; die Feder 65 besteht vorzugsweise aus Inconel, einer Nickelbasis-Legierung, oder aus einem ähnlichen hochwarmfesten Werkstoff. Das erste Ventil 220 weist eine zwischen der Feder 65 und dem Ventilkörper 60 angeordnete Unterlagscheibe 210 zur Einstellung des Hubs H (vgl. Fig. 3) der Feder 65 bzw. der nach außen öffnenden Ventilnadel 63 auf. Diese Einstellung erfolgt einmalig bei der Herstellung des Ventils 200. Alternativ kann der Ventilkörper 60 auch reversibel befestigbar, beispielsweise in den Ventilträger 60 einschraubbar, ausgeführt sein, so dass im Falle einer Wartung oder Reparatur die Unterlagscheibe gegen eine Unterlagscheibe mit anderer Dicke ausgetauscht werden kann. In Strömungsrichtung des zu dosierenden Fluids bzw. des zu dosierenden Reduktionsmittels bzw. des zu dosierenden Kraftstoffs gesehen dem ersten Ventil 220 vorgelagert ist das zweite magnetgesteuerte Ventil 225, das die Zumessfunktion übernimmt. Dieses zweite Ventil weist die zweite Ventilnadel 230 auf, die über eine zwischen der Ventilnadel 230 und einem Hubanschlag 240 eingespannte zweite Feder 235 gegen die Ventildichtkante 265 des in den Ventilträger 610 integrierten zweiten Ventilkörpers 260 gedrückt wird. Der maximale Hub der zweiten Ventilnadel bestimmt sich durch die Hubhöhe 275, die durch den Abstand einander zugewandter Seiten von Hubanschlag 240 und zweiter Ventilnadel 230 gegeben ist. Die zweite Ventilnadel 230 besteht aus magnetischem, insbesondere ferromagnetischem, Material und wird gegen die Kraft der zweiten Feder 235 über ein einschaltbares Magnetfeld der am Ventilträger 610 angeordneten Magnetspule 245 angehoben, so dass das zu dosierende Fluid über den Raum 280 zwischen dem Ventilträger 610 und der Ventilnadel 230 hindurch den Bereich der Ventildichtkante 265 passieren kann. Dabei gelangt das Fluid in ein zwischen dem zweiten und dem ersten Ventil befindliches Resonanzvolumen 250, das durch die Beabstandung der beiden Ventile über die Höhe 270 in dem Ventilträger 610 gebildet wird.

Im geschlossenen Zustand drückt die Feder 65 den Ventilkopf der nach außen öffnenden Nadel 63 mit definierter Kraft in den durch den Ventilkörper 60 gebildeten Sitz. Zur Dosierung von Kraftstoff wird das Magnetventil angesteuert, so dass der über den Raum 280 anliegende Versorgungsdruck am Sitz angreift und zum Öffnen der Nadel 63 führt. Durch die gezielte Abstimmung der Strömungs-, Druck- und Federkraft, des Resonanzvolumens 250 zwischen den beiden Ventilen sowie der Auslegung des Resonanzkörpers, zu dem hauptsächlich die Ventilnadel 63, die Feder 65, das Resonanzvolumen 250 und das (Kraftstoff-)Volumen im Bereich der Feder 65 zählen, führt die Nadel 63 während der Dosierung die erforderliche stabile Schwingbewegung um eine Mittellage aus. Die Frequenz dieser Schwingung liegt zwischen 100 und 10000 Hz. Die Ansteuerung des Magnetventils erfolgt beispielsweise frequenz- und/oder pulsweitenmoduliert in Abhängigkeit von der angeforderten Dosiermenge an Fluid, beispielsweise Kraftstoff oder anderen Flüssigkeiten. Das Injektorprinzip nach Fig. 14 zeichnet sich durch eine Integration der Sprayaufbereitung und Zumessfunktion in einer Komponente aus, deren Funktion nicht durch im Abgas vorhandenen Ruß beeinträchtigt wird. Das Kombinationsventil 200 ist eine Zusammenführung einer nach außen öffnenden druckgesteuerten Düse und eines davon stromaufwärts gelegenen Magnetventils, so dass ein definiertes Volumen zwischen den beiden Ventilen entsteht. Dieses definierte Volumen dient als Resonanzkörper für Druckwellen, so dass die Düsennadel 63 zusammen mit dem Federteller 67 und der Feder 65 während der Dosierung konstruktionsbedingt eine stabile Längsschwingung ausführt. Dieser Schwingungszustand, das sog. Schnarren, wird durch die gezielte Abstimmung von Strömungs- und Federkraft erreicht. Dabei ist auch hier die Geometrie des Ventilkopfs der Ventilnadel 63 und des zugeordneten Ventilsitzes (vgl. Ventilsitz 130 in Fig. 13 bzw. Ventilsitz 13 in Fig. 3) so ausgeführt, dass eine auf das erste Ventil 220 wirkende Strömungskraft des zugeführten Kraftstoffs über einem Hub des Ventilkopfes kontinuierlich abfällt. Durch die Kombination zweier Ventilprinzipien entsteht ein verkokungsresistentes Ventil, das gleichzeitig auch für die genaue Zumessung von Kraftstoff ins Abgas verwendet werden kann. Die Dosiertoleranzen können im Vergleich zur Verwendung zweier getrennter Ventile reduziert werden. Zum Einen liefert also das definierte Resonanzvolumen 250 definierte Bedingungen für die Gewährleistung des Schnarrbetriebs, zum Anderen ist die Dosiergenauigkeit aufgrund des definierten und kleinen Volumens zwischen den beiden Ventilen höher, und es ist im Unterschied zu den Anordnungen nach Fig. 3 oder 13 zur gezielten Steuerung der Dosiermenge kein zusätzliches separates Zumessventil erforderlich.

Wahlweise kann das zweite Ventil 225 auch als piezoelektrisch angesteuertes oder in sonstiger Weise elektrisch schaltbares Ventil ausgeführt sein.

Die Ansteuerung des Einspritzventils (10, 100, 200) erfolgt getaktet bzw. pulsweitenmoduliert. Dabei arbeitet das Einspritzventil , vorzugsweise in einem Zeitabschnitt, in dem das Einspritzventil zu seiner Öffnung angesteuert wird, im Schnarrbetrieb. Der Schnarrbetrieb besteht vorzugsweise darin, dass der Ventilkopf des Einspritzventils um eine Mittellage schwingt, im wesentlichen ohne einen im geschlossenen Zustand des Einspritzventils mit dem Ventilkopf wechselwirkenden Ventilsitz zu berühren. Die dem Schnarrbetrieb zugeordnete Schwingfrequenz des Ventilkopfes bzw. der Ventilnadel liegt hierbei vorzugsweise in einem Bereich zwischen 100 und 10000 Hz.

Die erfindungsgemäße Vorrichtung zur Regeneration, zur Temperaturbeaufschlagung und/oder zum Thermomanagement eines einem Abgassystem zugeordneten Bauteils einer Brennkraftmaschine umfasst mindestens ein Einspritzventil bzw. ist als Einspritzventil ausgebildet. Die Beaufschlagung des Abgases erfolgt vorzugsweise nachmotorisch, das heißt, das Fluid, insbesondere der Kraftstoff, wird dem Abgas zugeführt, nachdem dieses die Brennkraftmaschine verlassen hat.

## Patentansprüche

1. Einspritzventil, welches ein Fluid, insbesondere Kraftstoff, vorzugsweise im Schnarrbetrieb, beispielsweise in Abhängigkeit des Drucks des zugeführten Fluids, in ein Abgassystem einspritzt, **dadurch gekennzeichnet, dass** ein Ventilkopf (11, 110) und ein Ventilsitz (13, 130) vorgesehen sind wobei ein äußerer Kopfdurchmesser (14) des Ventilkopfes (11, 110) größer als ein äußerer Sitzdurchmesser (15) des Ventilsitzes (13) ausgeführt ist, wodurch der Ventilkopf (11,110) im geschlossenen Zustand über eine Ventildichtkante (20, 145) auf den äußeren Sitzdurchmesser (15) gelegt ist, so dass die Geometrien des Ventilkopfes (11, 110) und des Ventilsitzes (13, 130) so ausgeführt sind, dass eine auf das Einspritzventil (10, 100, 200) wirkende Strömungskraft des zugeführten Fluids über einem Hub (H) des Ventilkopfes (11, 110) kontinuierlich abfällt.

2. Einspritzventil nach Anspruch 1, **dadurch gekennzeichnet, dass** der Ventilkopf (110) zumindest in geschlossenem Zustand des Einspritzventils, vorzugsweise auch in geöffnetem Zustand des Einspritzventils, relativ zu einem Randbereich (142) des Einspritzventils zurückversetzt ist.

3. Einspritzventil nach Anspruch 2, **dadurch gekennzeichnet, dass** der Randbereich (142) über einen abgeschrägten Bereich (140) mit dem Ventilsitz (130) in Verbindung steht, so dass sich zwischen dem Ventilkopf (110) und dem Randbereich (142) eine vom abgeschrägten Bereich (140) und dem Ventilkopf (110) begrenzte Nische (150) ausbildet.

4. Einspritzventil nach einem der vorhergehenden Ansprüche, **dadurch gekennzeichnet, dass** des Ventilsitz (13, 130) zwischen einem inneren Sitzdurchmesser (17) und dem äußeren Sitzdurchmesser (15) eine gerade Ventilschnittkante (19) aufweist, welche einen vorgegebenen Winkel zur Senkrechten aufweist.

5. Einspritzventil nach einem der vorhergehenden Ansprüche, **dadurch gekennzeichnet, dass** eine Ventilschnittkante (18) des Ventilkopfes (11,110) von einem inneren Kopfdurchmesser (16) auf den äußeren Kopfdurchmesser (14) mit einer flachen kugelförmigen Außenwölbung zunimmt, welche einen vorgegebenen Ventilkopfradius (21) aufweist.

6. Einspritzventil nach einem der vorhergehenden Ansprüche, **dadurch gekennzeichnet, dass** jenseits des äußeren Sitzdurchmessers (15) zwischen dem Ventilsitz (130) und einem Randbereich (142) bzw. dem Randbereich (142) des Ventils ein abgeschrägter Bereich (140) vorgesehen ist, so dass sich der Ventilkopf innerhalb einer vom abgeschrägten Bereich (140) seitlich begrenzten Nische bewegen kann und gegenüber dem Randbereich zumindest im geschlossenen Zustand des Ventils zurückversetzt ist.

7. Einspritzventil nach einem der vorhergehenden Ansprüche, **dadurch gekennzeichnet, dass** das Einspritzventil (10, 100, 200) als federbelastetes Ventil ausgeführt ist.

8. Einspritzventil nach einem der Ansprüche 1 bis 7, **dadurch gekennzeichnet, dass** ein als Zumessventil (225) fungierendes zusätzliches Ventil im Einspritzventil (200) integriert ist.

9. Einspritzventil nach Anspruch 8, **dadurch gekennzeichnet, dass** das Zumessventil (225) stromaufwärts des Ventilkopfes (11, 110) und des Ventilsitzes (13, 130) angeordnet ist.

10. Einspritzventil nach Anspruch 9, **dadurch gekennzeichnet, dass** das Zumessventil (225) über einen Ventilträger (610) mit einem den Ventilsitz (13, 130) aufweisenden Ventilkörper (60) verbunden ist.

11. Einspritzventil nach Anspruch 10, **dadurch gekennzeichnet, dass** der Ventilträger (610) zwischen dem Zumessventil (225) und dem Ventilkörper (60) ein Resonanzvolumen (250) begrenzt.

12. Vorrichtung zur Regeneration, zur Temperaturbeaufschlagung und/oder zum Thermomanagement eines einem Abgassystem zugeordneten Bauteils einer Brennkraftmaschine, mit mindestens einem Einspritzventil nach Anspruch 1.

13. Vorrichtung nach Anspruch 12, **dadurch gekennzeichnet, dass** dem Einspritzventil (10, 100, 200) ein die Kraftstoffzufuhr unterbindendes Sicherheitsventil (8) vorgeschaltet ist.

14. Vorrichtung nach einem der Ansprüche 12 oder 13, **dadurch gekennzeichnet, dass** dem Einspritzventil (10, 100) ein die Kraftstoffmenge bestimmendes Zumessventil (9) vorgeschaltet ist.

15. Vorrichtung nach Anspruch 13 und 14, **dadurch gekennzeichnet, dass** das Einspritzventil (10, 100, 200), das Sicherheitsventil (8) und das Zumessventil (9, 225) in einem Niederdruckkreis (2) eines Kraftstoffeinspritzsystems der Brennkraftmaschine angeordnet sind.

16. Vorrichtung nach einem der Ansprüche 12 bis 15, **dadurch gekennzeichnet, dass** das Bauteil ein Partikelfilter, insbesondere ein Dieselpartikelfilter, oder ein NOx-Speicher ist.

17. Verfahren zur Regeneration, zur Temperaturbeaufschlagung und/oder zum Thermomanagement eines einem Abgassystem zugeordneten Bauteils einer Brennkraftmaschine, wobei mittels mindestens eines Einspritzventils (10, 100, 200) ein Fluid, insbesondere Kraftstoff, vorzugsweise im Schnarrbetrieb, beispielsweise in Abhängigkeit des Drucks des zugeführten Fluids, in das Abgassystem eingespritzt wird, **dadurch gekennzeichnet, dass** das Einspritzventil einen Ventilkopf (11, 110) und einen Ventilsitz (13, 130) aufweist, wobei ein äußerer Kopfdurchmesser (14) des Ventilkopfes (11,110) größer als ein äußerer Sitzdurchmesser (15) des Ventilsitzes (13) ausgeführt ist, wodurch der Ventilkopf (11, 110) im geschlossenen Zustand über eine Ventildichtkante (20, 145) des Ventilsitzes (13, 130) übersteht, und wobei die Ventildichtkante (20, 145) auf den äußeren Sitzdurchmesser (15) gelegt ist, so dass eine auf das Einspritzventil (10, 100, 200) wirkende Strömungskraft des zugeführten Fluids über einen Hub (H) des Ventilkopfes (11, 110) kontinuierlich abfällt.

## Claims

1. Injection valve which injects a fluid, in particular fuel, into an exhaust system preferably in a chatter mode, for example as a function of the pressure of the supplied fluid, **characterized in that** a valve head (11, 110) and a valve seat (13, 130) are provided, with an outer head diameter (14) of the valve head (11, 110) being larger than an outer seat diameter (15) of the valve seat (13), as a result of which the valve head (11, 110) is placed, in the closed state, on the outer seat diameter (15) via a valve sealing edge (20, 145), such that the geometries of the valve head (11, 110) and of the valve seat (13, 130) are designed such that a flow force exerted by the supplied fluid on the injection valve (10, 100, 200) decreases continuously over a stroke (H) of the valve head (11, 110).

2. Injection valve according to Claim 1, **characterized in that**, at least in the closed state of the injection valve, and preferably also in the open state of the injection valve, the valve head (110) is recessed relative to an edge region (142) of the injection valve.

3. Injection valve according to Claim 2, **characterized in that** the edge region (142) is connected to the valve seat (130) via a bevelled region (140), such that between the valve head (110) and the edge region (142) there is formed a niche (150) which is delimited by the bevelled region (140) and the valve head (110).

4. Injection valve according to one of the preceding claims, **characterized in that** the valve seat (13, 130) has, between an inner seat diameter (17) and the outer seat diameter (15), a straight valve intersecting edge (19) which is at a predefined angle relative to the vertical.

5. Injection valve according to one of the preceding claims, **characterized in that** a valve intersecting edge (18) of the valve head (11, 110) expands from an inner head diameter (16) to the outer head diameter (14) with a flat spherical external curvature which has a predefined valve head radius (21).

6. Injection valve according to one of the preceding claims, **characterized in that** a bevelled region (140) is provided outside the outer seat diameter (15) between the valve seat (130) and an edge region (142) or the edge region (142) of the valve, such that the valve head can move within a niche delimited laterally by the bevelled region (140) and is recessed relative to the edge region at least in the closed state of the valve.

7. Injection valve according to one of the preceding claims, **characterized in that** the injection valve (10, 100, 200) is designed as a spring-loaded valve.

8. Injection valve according to one of Claims 1 to 7, **characterized in that** an additional valve which functions as a metering valve (225) is integrated in the injection valve (200).

9. Injection valve according to Claim 8, **characterized in that** the metering valve (225) is arranged upstream of the valve head (11, 110) and of the valve seat (13, 130).

10. Injection valve according to Claim 9, **characterized in that** the metering valve (225) is connected via a valve carrier (610) to a valve body (60) which has the valve seat (13, 130).

11. Injection valve according to Claim 10, **characterized in that** the valve carrier (610) delimits a resonance volume (250) between the metering valve (225) and the valve body (60).

12. Device for regeneration, temperature loading and/or thermal management of a component, which is assigned to an exhaust system, of an internal combustion engine, having at least one injection valve according to Claim 1.

13. Device according to Claim 12, **characterized in that** a safety valve (8) which shuts off the supply of fuel is connected upstream of the injection valve (10, 100, 200).

14. Device according to either of Claims 12 and 13, **characterized in that** a metering valve (9) which determines the fuel quantity is connected upstream of the injection valve (10, 100).

15. Device according to Claim 13 and 14, **characterized in that** the injection valve (10, 100, 200), the safety valve (8) and the metering valve (9, 225) are arranged in a low-pressure circuit (2) of a fuel injection system of the internal combustion engine.

16. Device according to one of Claims 12 to 15, **characterized in that** the component is a particle filter, in particular a diesel particle filter, or a NOx accumulator.

17. Method for regeneration, for temperature loading and/or for thermal management of a component, which is assigned to an exhaust system, of an internal combustion engine, with a fluid, in particular fuel, being injected into the exhaust system by means of at least one injection valve (10, 100, 200), preferably in a chatter mode, for example as a function of the pressure of the supplied fluid, **characterized in that** the injection valve has a valve head (11, 110) and a valve seat (13, 130), with an outer head diameter (14) of the valve head (11, 110) being larger than an outer seat diameter (15) of the valve seat (13), as a result of which the valve head (11, 110) projects, in the closed state, beyond a valve sealing edge (20, 145) of the valve seat (13, 130), and with the valve sealing edge (20, 145) being placed on the outer seat diameter (15) such that a flow force exerted by the supplied fluid on the injection valve (10, 100, 200) decreases continuously over a stroke (H) of the valve head (11, 110).

## Revendications

1. Soupape d'injection qui injecte un fluide, en particulier du carburant, de préférence en mode de broutage, par exemple en fonction de la pression du fluide acheminé, dans un système de gaz d'échappement, **caractérisée en ce qu'**une tête de soupape (11, 110) et un siège de soupape (13, 130) sont prévus, un diamètre de tête extérieur (14) de la tête de soupape (11, 110) étant supérieur à un diamètre de siège extérieur (15) du siège de soupape (13), de sorte que la tête de soupape (11, 110), dans l'état fermé, soit placée par le biais d'une arête d'étanchéité de soupape (20, 145) sur le diamètre de siège extérieur (15), de sorte que les géométries de la tête de soupape (11, 110) et du siège de soupape (13, 130) soient réalisées de telle sorte qu'une force d'écoulement agissant sur la soupape d'injection (10, 100, 200) du fluide acheminé diminue en continu sur une course (H) de la tête de soupape (11, 110).

2. Soupape d'injection selon la revendication 1, **caractérisée en ce que** la tête de soupape (110), au moins dans l'état fermé de la soupape d'injection, est en retrait, de préférence également dans l'état ouvert de la soupape d'injection, par rapport à une région de bord (142) de la soupape d'injection.

3. Soupape d'injection selon la revendication 2, **caractérisée en ce que** la région de bord (142) est en liaison avec le siège de soupape (130) par le biais d'une région biseautée (140), de sorte qu'entre la tête de soupape (110) et la région de bord (142) se forme une niche (150) limitée par la région biseautée (140) et la tête de soupape (110).

4. Soupape d'injection selon l'une quelconque des revendications précédentes, **caractérisée en ce que** le siège de soupape (13, 130) présente, entre un diamètre de siège intérieur (17) et le diamètre de siège extérieur (15), une arête de coupe de soupape droite (19), qui présente un angle prédéfini par rapport à la verticale.

5. Soupape d'injection selon l'une quelconque des revendications précédentes, **caractérisée en ce qu'**une arête de coupe de soupape (18) de la tête de soupape (11, 110) augmente depuis un diamètre de tête intérieur (16) jusqu'au diamètre de tête extérieur (14) avec une courbure extérieure de forme sphérique plate, qui présente un rayon de tête de soupape prédéfini (21).

6. Soupape d'injection selon l'une quelconque des revendications précédentes, **caractérisée en ce que** l'on prévoit de chaque côté du diamètre de siège extérieur (15) entre le siège de soupape (130) et une région de bord (142) ou la région de bord (142) de la soupape, une région biseautée (140), de sorte que la tête de soupape puisse se déplacer à l'intérieur d'une niche limitée latéralement par la région biseautée (140) et soit en retrait par rapport à la région de bord au moins dans l'état fermé de la soupape.

7. Soupape d'injection selon l'une quelconque des revendications précédentes, **caractérisée en ce que** la soupape d'injection (10, 100, 200) est réalisée sous forme de soupape sollicitée par ressort.

8. Soupape d'injection selon l'une quelconque des revendications 1 à 7, **caractérisée en ce qu'**une soupape supplémentaire servant de soupape de dosage (225) est intégrée dans la soupape d'injection (200).

9. Soupape d'injection selon la revendication 8, **caractérisée en ce que** la soupape de dosage (225) est disposée en amont de la tête de soupape (11, 110) et du siège de soupape (13, 130).

10. Soupape d'injection selon la revendication 9, **caractérisée en ce que** la soupape de dosage (225) est connectée par le biais d'un support de soupape (610) à un corps de soupape (60) présentant le siège de soupape (13, 130).

11. Soupape d'injection selon la revendication 10, **caractérisée en ce que** le support de soupape (610) délimite un volume de résonance (250) entre la soupape de dosage (225) et le corps de soupape (60).

12. Dispositif pour la régénération, pour la sollicitation en température et/ou pour la thermogestion d'un composant d'un moteur à combustion interne associé à un système de gaz d'échappement, comprenant au moins une soupape d'injection selon la revendication 1.

13. Dispositif selon la revendication 12, **caractérisé en ce qu'**une soupape de sécurité (8) supprimant l'alimentation en carburant est montée en amont de la soupape d'injection (10, 100, 200).

14. Dispositif selon l'une quelconque des revendications 12 ou 13, **caractérisé en ce qu'**une soupape de dosage (9) déterminant la quantité de carburant est montée en amont de la soupape d'injection (10, 100).

15. Dispositif selon la revendication 13 et la revendication 14, **caractérisé en ce que** la soupape d'injection (10, 100, 200), la soupape de sécurité (8) et la soupape de dosage (9, 225) sont disposées dans un circuit basse pression (2) d'un système d'injection de carburant du moteur à combustion interne.

16. Dispositif selon l'une quelconque des revendications 12 à 15, **caractérisé en ce que** le composant est un filtre à particule, en particulier un filtre à particule diésel ou un accumulateur de NOx.

17. Procédé pour la régénération, pour la sollicitation en température et/ou pour la thermogestion d'un composant associé à un système de gaz d'échappement d'un moteur à combustion interne, un fluide, en particulier du carburant, de préférence en mode de broutage, étant injecté par exemple en fonction de la pression du fluide acheminé, dans le système de gaz d'échappement au moyen d'au moins une soupape d'injection (10, 100, 200), **caractérisé en ce que** la soupape d'injection présente une tête de soupape (11, 110) et un siège de soupape (13, 130), un diamètre de tête extérieur (14) de la tête de soupape (11, 110) étant supérieur à un diamètre de siège extérieur (15) du siège de soupape (13), de sorte que la tête de soupape (11, 110), dans l'état fermé, dépasse au-delà d'une arête d'étanchéité de soupape (20, 145) du siège de soupape (13, 130), et l'arête d'étanchéité de soupape (20, 145) étant placée sur le diamètre de siège extérieur (15), de sorte qu'une force d'écoulement du fluide acheminé agissant sur la soupape d'injection (10, 100, 200) diminue en continu sur une course (H) de la tête de soupape (11, 110).
